# EUROPÄISCHE PATENTSCHRIFT

(11) **EP 3 643 076 B1**
(45) Veröffentlichungstag und Bekanntmachung des Hinweises auf die Patenterteilung: **17.01.2024**
(21) Anmeldenummer: 18731740.9
(22) Anmeldetag: 08.06.2018
(51) Int. Cl.: H04Q 9/00, G01D 4/00

(54) **VERFAHREN UND SYSTEM ZUR SAMMLUNG VON SENSORDATEN**
METHOD AND SYSTEM FOR COLLECTING SENSOR DATA
PROCÉDÉ ET SYSTÈME DE COLLECTE DE DONNÉES DE CAPTEUR

(30) Priorität: 23.06.2017 FR 1755760
(43) Veröffentlichungstag der Anmeldung: 29.04.2020
(73) Patentinhaber: Diehl Metering S.A.S., 68300 Saint-Louis (FR)
(72) Erfinder: BACH, Guy, 68640 Waldighoffen (FR)
(74) Vertreter: Diehl Patentabteilung
(86) Internationale Anmeldenummer: PCT/EP2018/000298
(87) Internationale Veröffentlichungsnummer: WO 2018/233865

(56) Entgegenhaltungen:
- WO-A2-2015/000943
- CA-A1- 2 332 297
- DE-A1-102015 205 379
- FR-A1- 2 984 575
- US-A1- 2005 083 197
- US-A1- 2006 202 855

## Beschreibung

Die vorliegende Erfindung betrifft den Bereich der Fernauslesung, d. h. die Fernsammlung und die Zentralisierung von Messdaten, die von einzelnen, geografisch verteilten und energieautarken Sensoren, Detektoren oder vergleichbaren Mitteln geliefert werden.

Die Erfindung betrifft insbesondere ein Verfahren und ein System zur Sammlung und Fernauslesung der von solchen Sensoren gelieferten Messdaten.

Im Bereich der Fernauslesung von Haushaltszählern durch Funkübertragung werden bisher die von dem betreffenden Sensor gelieferten Rohmessdaten vor Ort ausgewertet und von diesem Sensor oder seinem zugehörigen Funkmodul in Abhängigkeit von den verfügbaren Analysemitteln (Software des Mikroprozessors oder des Mikrocontrollers des Sensors oder Funkmoduls) und den auszuführenden "Business"-Funktionen verarbeitet.

Angesichts der Vielfalt der von den Betreibern oder den Bedienern gewünschten "Busi-ness"-Funktionen und ihrer Entwicklung im Laufe der Lebensdauer der Sensoren müssen die elektronischen und computergestützten Mittel jeder Sensor/Funkmodul-Baugruppe hoch entwickelt und komplex genug sein, um ausreichende und zeitlich adaptive Ressourcen sowie eine bidirektionale Funkverbindung bereitzustellen oder nicht (zumindest um die notwendige Erweiterungsfähigkeit der Softwaremittel zu ermöglichen).

Dies führt zu großen Problemen bei der Steuerung des lokalen Energieverbrauchs und damit der Betriebsautonomie (Notwendigkeit der wiederholten Wartung, Batteriewechsel, Austausch des Funkmoduls usw.) und der Übertragungssicherheit (aufgrund der möglichen Bidirektionalität).

Angesichts der Art der übermittelten Daten (Ergebnisse der lokalen Verarbeitung) und der zeitlichen Entwicklung der Art der durchgeführten lokalen Verarbeitung können außerdem die über einen längeren Zeitabschnitt gesammelten Daten nicht homogen sein oder sogar den Zugang zu bestimmten, in Werten angegebenen Informationen, die während eines früheren Auswertungszeitraums der Sensoren nicht einbezogen oder nicht berücksichtigt wurden, unmöglich machen.

Noch sensibler ist die Frage der Energieautarkie, wenn die Uplink-Übertragung (vom Sensor zum stationären oder mobilen Fernauslesegerät) in regelmäßigen Abständen wiederholt durchgeführt wird und somit erhebliche Energiekosten für die Verarbeitung und das Aussenden anfallen.

Dieses vorstehend erläuterte vielschichtige Problem tritt insbesondere im Zusammenhang mit der Messung des Verbrauchs von Personen (Gas, Wasser, Energie etc.) oder der permanenten Überwachung eines oder mehrerer Parameter lokaler physikalischer oder physikalisch-chemischer Größen auf.

In der FR 2 984 575 A1 wird ein Verfahren zum Wechseln von z. B. Drucksensoren, die in einem bestimmten geografischen Gebiet verteilt sind, offenbart. Das Verfahren umfasst das Liefern einer Reihe von Informationen, z. B. Zeitstempelinformationen, durch eine Reihe von Sensoren.

Die US 2005/083197 A1 beschreibt eine Vorrichtung und ein Verfahren zur effizienten Erfassung von Daten an einem entfernten Gerät mit einem Gerät, das sowohl analoge als auch digitale Signale verwenden kann. Die gesammelten Daten werden in einem Paket komprimiert und an eine Basisstation gesendet, wo sie zur Verfügung gestellt werden.

In der WO 2015/000943 A2 wird ein elektrischer Zähler offenbart, der Messdaten abruft, die zur Verfügung gestellt werden sollen. Der Zähler klassifiziert jedes Element der abgerufenen Daten in Abhängigkeit von einer Mindestanzahl von Bits zur Darstellung des Datenelements. Der Stromzähler bestimmt für jede Klasse aus einer vorbestimmten Vielzahl von Klassen eine Anzahl von Bits, die zur Darstellung jedes Datenelements der Klasse zugewiesen wird, als Funktion der Mindestanzahl von Bits zur jeweiligen Darstellung der Daten der Klasse. Der Stromzähler komprimiert jedes abgerufene Datenelement, indem er das Datenelement mit einer Anzahl von Bits darstellt, die gleich der Anzahl von Bits ist, die der Klasse des Datenelements zugewiesen sind, und indem er vor dem komprimierten Datenelement ein vordefiniertes Präfix einfügt, das der Klasse zugeordnet ist. Der Stromzähler enthält in einer Kopfzeile für jede Klasse eine Information, die für die Anzahl der Bits repräsentativ ist, die für die Darstellung jedes Datenelements dieser Klasse zugewiesen wurden.

Die CA 2 332 297 A1 beschreibt eine Schnittstellenkarte, die für den Anschluss eines Stromverbrauchsmessgeräts an eine Pager-Karte vorgesehen ist. Die Schnittstellenkarte übermittelt Daten an einen entfernten Host-Computer. Die Schnittstellenkarte umfasst einen Eingangsanschluss zur Verbindung mit dem Messgerät, um periodisch Lastprofildaten aus dem Messgerät auszulesen, und einen Ausgangsanschluss zur Verbindung mit der Pager-Karte, um Lastprofildaten an die Pager-Karte auszugeben. Die Lastprofildaten können über die Pager-Karte und ein Pager-System an einen entfernten Host-Computer übertragen werden. In der Schnittstellenkarte ist ein kompaktes, effizientes differentielles Komprimierungsverfahren vorgesehen, um die Sendezeitkosten für die Übertragung von Lastprofildaten zu reduzieren.

In der DE 10 2015 205379 A1 wird eine Vorrichtung offenbart, die dem Ermitteln von Energiemanagementdaten in einer Automatisierungsanlage dient. Ein Sensor der Automatisierungsanlage wird an eine erste Anschlusseinrichtung angeschlossen. Ein Empfangsmodul empfängt Sensorwerte des Sensors an der ersten Anschlusseinrichtung. Eine Uhr ermittelt zu den empfangenen Sensorwerten einen jeweiligen Zeitstempelwert. Eine Speichereinrichtung speichert die empfangenen Sensorwerte zusammen mit ihrem jeweiligen Zeitstempelwert zwischen. Ein Schnittstellenmodul stellt die gespeicherten Sensorwerte zusammen mit ihrem jeweiligen gespeicherten Zeitstempelwert an einer Kommunikationsschnittstelle einem vorrichtungsexternen Auslesegerät bereit.

Die US 2006/202855 A1 offenbart Systeme und Verfahren zur Erfassung von Verbrauchsdaten in verteilten Zählersystemen. Es wird eine auf Mengenintervallen oder Zählschritten basierende Erfassung, Ablesung, Aufzeichnung und/oder Übertragung von Verbrauchsdaten für verteilte Zählerablesesysteme von Versorgungsunternehmen beschrieben.

Aufgabe der vorliegenden Erfindung ist es, zumindest einige, vorzugsweise alle der oben genannten Nachteile auszugleichen.

Diese Aufgabe wird durch ein Verfahren zum Sammeln von Daten mit den Merkmalen des Patentanspruchs 1 und ein System zur Fernauslesung mit den Merkmalen des Patentanspruchs 11 gelöst. Vorteilhafte Ausgestaltungen und Weiterbildungen der Erfindung sind Gegenstand der abhängigen Patentansprüche.

Die Erfindung betrifft insbesondere ein Verfahren zum Sammeln von Daten, die von Messsensoren geliefert werden, welche lokal angeordnet und Funk-Kommunikationsmitteln zugeordnet sind, die in die jeweiligen Sensoren integriert sind oder abgesetzte Module bilden, wobei diese Sensoren und/oder diese Module Mittel zum Speichern und Aufbereiten der Messwerte sowie eine autonome Stromquelle für den Sensor und die Kommunikationsmittel umfassen, wobei das Verfahren dadurch gekennzeichnet ist, dass es mindestens die folgenden Schritte umfasst:
Aufnehmen aufeinanderfolgender Messdaten, die zeitgestempelten elementaren Messeinheiten von mindestens einer/m von dem Sensor gelieferten physikalischen oder physikalisch-chemischen Größe oder Parameter entsprechen, in jedem betreffenden Sensor,
die von dem Messelement des jeweiligen Sensors gelieferten elementare Messeinheiten einen der Auflösung des jeweiligen Messelements oder einem Vielfachen davon entsprechenden Wert einer physikalischen oder physikalisch-chemischen Größe oder eines physikalischen oder physikalisch-chemischen Parameters oder eine der Auflösung des jeweiligen Messelements oder einem Vielfachen davon entsprechende Änderung einer physikalischen oder physikalisch-chemischen Größe oder eines physikalischen oder physikalisch-chemischen Parameters darstellen,
in Übereinstimmung mit der Auflösung des betrachteten Sensors,
wobei jede zeitgestempelte elementare Messeinheit aus einem zeitgestempelten Impuls besteht, so dass die elementaren Messeinheiten genaue Datierungen von Rohmessdaten darstellen,
Abspeichern dieser Rohmessdaten in den Speichermitteln des Sensors oder des Moduls,
Übertragen der unverarbeiteten Rohmessdaten in komprimierter Form über eine Funkstrecke, wobei es umfasst, die komprimierten Rohmessdaten durch Formatierung in Datenpaketen (PAⱼ) vorbestimmter fester Größe zu verpacken, wiederholt und bedingt jeweils nach Erreichen der Größe eines Datenpakets (PAⱼ) an akkumulierten komprimierten Rohmessdaten oder nach Ablauf eines vorgegebenen Zeitintervalls und nach Erreichen der Größe eines Datenpakets (PAⱼ) an akkumulierten komprimierten Rohmessdaten, die seit einer vorherigen Übertragung angesammelt wurden, und
Sammeln, Speichern und Auswerten der von einer Vielzahl von Sensoren übertragenen Daten in einer entfernten zentralen Verarbeitungsanlage.

Die Erfindung wird anhand der nachfolgenden Beschreibung besser verständlich, die sich auf die bevorzugten Ausführungsformen bezieht, die als nicht einschränkende Beispiele und erläutert unter Bezug auf die beigefügten schematischen Zeichnungen angeführt werden.

Es zeigen:
die Figur 1 eine schematische und symbolische Darstellung eines Beispiels eines Fernauslesesystems für die Umsetzung des erfindungsgemäßen Verfahrens;
die Figuren 2A bis 2C schematisch zwei Ausführungsvarianten einer integrierten (Figur 2A) und einer nicht integrierten (Figuren 2B und 2C) Sensor-/Funk-Kommunikationsmittel-Baugruppe, die Teil eines Systems sind, wie es in Figur 1 dargestellt ist;
die Figur 3 ein Beispiel für ein Chronogramm der von einem Sensor ausgelesenen Rohmessdaten (in diesem Fall in Form von zeitgestempelten Impulsen) zwischen zwei Uplink-Übertragungsvorgängen (Nachrichten oder Telegramme, die zu den Zeitpunkten T_{E-1} und T_{E} von einem Funkmodul gesendet werden), in einem Kontext der Fernablesung des Volumenverbrauchs (in diesem Fall enthält das PAⱼ-Paket N zeitgestempelte Impulse);
die Figur 4 ein Beispiel für eine Nachrichtenstruktur, die von dem Funkmodul eines Sensors, wie er in den Figuren 2A, 2B und 2C dargestellt ist, emittiert wird, und
die Figur 5 ein Chronogramm, das die redundante Übertragung der zeitgestempelten Rohmessdatenpakete gemäß einer Ausführungsform des erfindungsgemäßen Verfahrens (Offset der Pakete nach einem FIFO-Modus) darstellt.

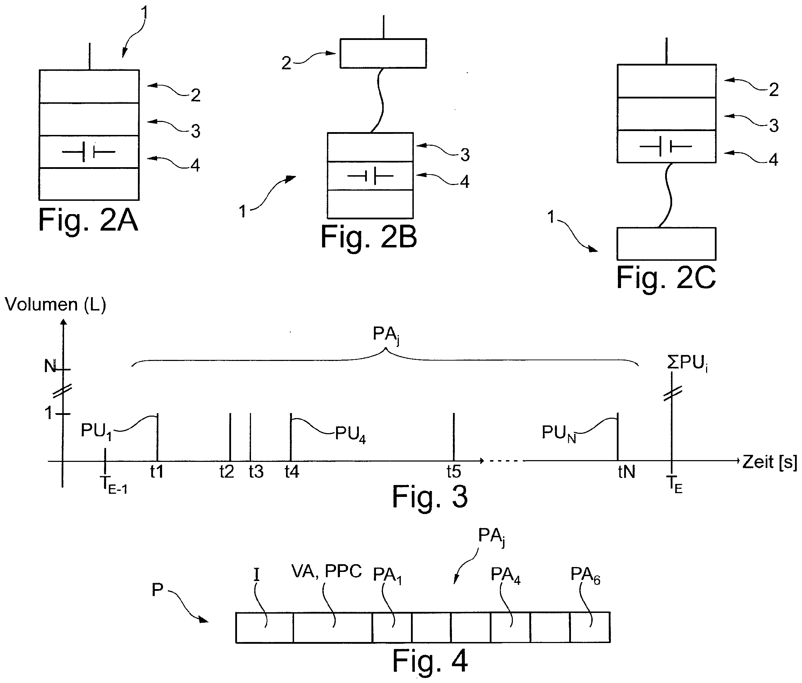

Der erste Gegenstand der Erfindung ist ein Verfahren zum Sammeln von Daten, die von Messsensoren 1 geliefert werden, welche lokal angeordnet und Funk-Kommunikationsmitteln 2 zugeordnet sind, die in die jeweiligen Sensoren 1 integriert sind (und somit eine einheitliche Baugruppe bilden - Figur 2A) oder abgesetzte Module bilden (Figuren 2B und 2C).

Diese Sensoren 1 und/oder diese Module 2 umfassen Mittel 3 zum Speichern und Aufbereiten der Messwerte für deren Übertragung sowie eine autonome Stromquelle 4 für den Sensor 1 und die Kommunikationsmittel 2.

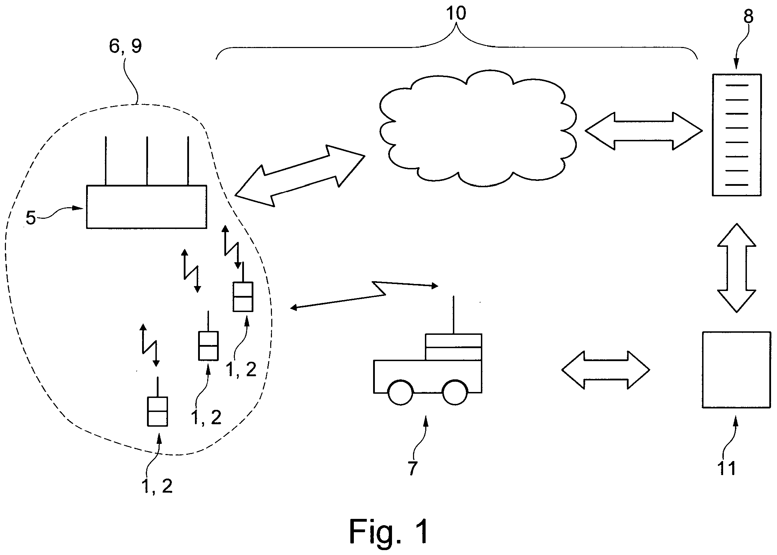

Wie dieses Verfahren umgesetzt werden kann, ist beispielhaft in den Figuren 1 bis 5 dargestellt.

Gemäß der Erfindung besteht dieses Verfahren zumindest darin:
Aufnehmen aufeinanderfolgender Messdaten, die zeitgestempelten elementaren Messeinheiten PUᵢ von mindestens einer/m von dem Sensor 1 gelieferten physikalischen oder physikalisch-chemischen Größe oder Parameter entsprechen, in jedem betreffenden Sensor 1,
Abspeichern dieser Rohmessdaten PUᵢ in den Speichermitteln 3 des Sensors 1 oder des Moduls 2,
wiederholtes und bedingtes Übertragen dieser unveränderten Daten PUᵢ über eine Funkstrecke und in komprimierter Form, jedes Mal nach Ablauf eines vorgegebenen Zeitintervalls und/oder nach Erreichen einer vorgegebenen Menge an Rohmessdaten PUᵢ, die seit der vorherigen Übertragung gesammelt und komprimiert wurden, und
Sammeln, Speichern und Auswerten der von einer Vielzahl von Sensoren 1 übertragenen Daten in einer entfernten zentralen Verarbeitungsanlage 8.

Dank der Erfindung ist es somit möglich, am Empfangsort über Informationen zu verfügen, die eine originalgetreue und vollständige Rekonstruktion aller von den verschiedenen Sensoren 1 gelieferten Rohmessdaten ermöglichen und eine unbegrenzte Flexibilität bei der Auswertung dieser Daten zulassen. So kann man einfach und zentral die Erweiterungsfähigkeit von "Business"-Funktionen berücksichtigen, ohne die Funktionsweise oder gar den Aufbau von Baugruppen [Sensoren 1/Kommunikationsmitteln 2] zu beeinflussen.

Der Aufbau des Sensors 1 kann daher einfacher und sein Betrieb sicherer sein, und der Energieverbrauch der Baugruppe aus dem Sensor 1 und den Kommunikationsmitteln 2 ist geringer als bei den aktuellen Ausführungen, welche die Daten lokal auswerten.

Schließlich muss die durchgeführte Übertragung nicht unbedingt bidirektional sein, es sei denn, es soll beispielsweise der Übertragungszeitpunkt eines Sensors 1 gesteuert werden.

Der Fachmann versteht selbstverständlich, dass die Erfindung auf die Messung und Fernauslesung verschiedenster Parameter und Größen angewendet werden kann: Es genügt erfindungsgemäß, eine elementare (vom Sensor messbare) Veränderung dieses Parameters oder dieser Größe in Übereinstimmung mit der Auflösung des betrachteten Sensors 1 genau datieren zu können (die zeitgestempelte elementare Variation kann der Auflösung des Sensors oder möglicherweise einem Vielfachen dieser Auflösung entsprechen).

Wenn sich die gemessene Größe oder der gemessene Parameter auch dekrementell ändern kann, sind die Rohmessdaten PUᵢ mit Zeitstempel und Vorzeichen versehene elementare Maßeinheiten (positive oder negative Einheiten).

Im Zusammenhang mit einer vorteilhaften Anwendung der Erfindung, verbunden mit dem Begriff des Verbrauchs, kann vorgesehen sein, dass die oder eine der gemessenen physikalischen Größe(n) sich auf ein Strömungsmedium bezieht, wobei jeder zeitgestempelte Rohmesswert PUᵢ einer elementaren Fluidmenge entspricht, die durch den Sensor 1, abhängig von seiner Messgenauigkeit, gemessen wird. Das gemessene Fluid kann beispielsweise Gas, Wasser, Kraftstoff oder eine chemische Substanz sein.

Alternativ oder kumulativ zu der oben genannten Ausführungsvariante kann die Erfindung auch vorsehen, dass die oder eine der gemessene(n) physikalisch-chemische(n) Größe(n) ausgewählt ist aus der Gruppe, die gebildet wird durch die Temperatur, den pH-Wert, die Leitfähigkeit und den Druck eines durch den betreffenden Sensor 1 hindurchströmenden oder von diesem kontaktierten Fluids.

Wenn alternativ oder kumulativ mindestens ein Parameter gemessen wird, kann dieser oder einer dieser gemessene(n) physikalische(n) oder physikalisch-chemische(n) Parameter kennzeichnend sein für die Qualität und/oder Zusammensetzung eines Fluids, das den betreffenden Sensor 1 durchströmt oder mit ihm in Kontakt kommt, wie z. B. Trübung, das Vorhandensein von Schadstoffen oder das Vorhandensein eines festen und/oder gasförmigen Anteils bzw. fester und/oder gasförmiger Anteile.

Die oben genannten Größen und Parameter sind selbstverständlich nur Beispiele, die nicht beschränkend sind.

Erfindungsgemäß besteht jeder Rohmesswert, wie insbesondere in Figur 3 dargestellt, aus einem zeitgestempelten Impuls PUᵢ.

So entsprechen die in Figur 3 gezeigten Impulse PU₁ bis PU_{N} jeweils einer Durchflussmenge von einem Liter durch einen Wasserzähler, mithin der Messauflösung des in dem Wasserzähler befindlichen Messelements (z. B. eines Flügelrad- oder eines Ringkolben-Messelements). Jeder dieser Impulse PUᵢ wird mit dem Zeitpunkt tᵢ gestempelt, an dem er vom Messelement gemessen wird. In dem Zeitintervall T_{E-1} bis T_{E} werden so N Impulse PUᵢ gemessen und zeitgestempelt gespeichert, was einer Durchflussmenge von insgesamt N Litern innerhalb dieses Zeitintervalls entspricht.

Damit sich das erfindungsgemäße Verfahren an Änderungen in der Entwicklung des Parameters oder der Messgröße anpassen kann und gleichzeitig eine zufriedenstellende Aktualisierung der verfügbaren Momentandaten gewährleistet ist, besteht das Verfahren vorteilhafterweise darin, eine neue Datenübertragung in Form einer Nachricht oder eines Telegramms durchzuführen, sobald mindestens eine der beiden nachfolgenden Bedingungen erfüllt ist:
a) ein vorgegebenes Zeitintervall ist abgelaufen und
b) eine vorgegebene Menge an komprimierten gesammelten Daten seit der vorherigen Übertragung ist erreicht.

Die Anwendung der genannten Bedingung (b) kann beispielsweise darin bestehen, nachdem eine vorgegebene Anzahl neuer Rohdaten ausgelesen wurde, regelmäßig die Größe aller neuen Daten in komprimierter oder verdichteter Form zu überprüfen.

Wenn diese Größe nahe einer kritischen Größe liegt, beispielsweise nahe der Größe eines durch das Übertragungsprotokoll festgelegten Pakets, wird ein neuer Übertragungsvorgang durchgeführt (Bedingung b) vor Bedingung a) verifiziert), es sei denn, die vordefinierte Grenzzeit zwischen zwei aufeinanderfolgenden Übertragungen wurde zuerst erreicht (Bedingung a) vor Bedingung b) verifiziert)).

Wie in Figur 1 schematisch dargestellt, besteht das Verfahren also vorzugsweise darin, wenn mindestens eine der Bedingungen erfüllt ist (sie können ausnahmsweise auch gleichzeitig erfüllt sein), die komprimierten und formatierten Rohmessdaten jedes betreffenden Sensors 1 entweder an ein festes Konzentratormodul 5, das ein lokales Netzwerk 6 von einer Vielzahl von ihm zugeordneten Sensoren verwaltet und anspricht und von dem es zumindest die Uplinkübertragungen verwaltet, oder direkt an die Verarbeitungsanlage 8, insbesondere in Abhängigkeit von der verwendeten Funk-Übertragungstechnik, der Leistung der Kommunikationsmittel 2 der verschiedenen Sensoren 1 und/oder der jeweiligen Standorte, über eine Funkstrecke zu übertragen.

Wo immer möglich, sollte eine Lösung gesucht werden, die den Einsatz von Konzentratormodulen 5 nicht oder nur für einen Teil eines lokalen Netzes 6 oder nur für bestimmte lokale Netze 6 in einem geografischen Gebiet 9 erfordert.

In einigen Anwendungskontexten wird jedoch der Einsatz von Konzentratormodulen 5 notwendig sein, um eine ausreichende Übertragungsqualität zu erreichen.

Genauer gesagt kann das Verfahren in Verbindung mit der Implementierung von Konzentratormodulen 5 hinsichtlich der Aufbereitung darin bestehen, die gespeicherten Rohmesswerte zu komprimieren oder zu verdichten und sie in ein für die Funk-Übertragung geeignetes Format zu bringen, die komprimierten und formatierten Daten, wenn mindestens eine der Bedingungen erfüllt ist, an ein festes Konzentratormodul 5 zu übertragen, das Teil eines drahtlosen lokalen Netzwerks 6 ist, und dann die komprimierten und formatierten Daten zusammen mit den komprimierten und formatierten Daten jedes der anderen Sensoren 1, die Teil desselben Netzwerks 6 sind, beispielsweise über eine Internetverbindung 10, zur zentralen Auswertung an eine entfernte Verarbeitungsanlage 8, wie etwa ein Rechenzentrum oder dergleichen, erneut zu übertragen.

Die energieautarken oder über Leitungen versorgten Konzentratormodule 5 können Module sein, die für diese Funktion bestimmt sind oder gemeinsam genutzt werden (sie erfüllen dann auch andere Funktionen).

Möglicherweise können einige Sensoren 1 über ihr Modul 2 als Konzentratormodule für umliegende Sensoren 1 mit eingeschränkteren oder hinsichtlich des Verbrauchs inkompatiblen Übertragungsmitteln fungieren.

Alternativ oder kumulativ zu den oben genannten Übertragungsmodi kann das Verfahren auch darin bestehen, für jeden betreffenden Sensor 1 die komprimierten Rohmessdaten über eine Funkstrecke an eine mobile Funk-Fernausleseeinheit 7 - nach Erhalt einer entsprechenden Abfrage von dieser letztgenannten oder automatisch in regelmäßigen Abständen (Figur 1) - zu übertragen.

Diese mobile Einheit 7 kann die abgerufenen Daten entweder über ein Zeitintervall (beispielsweise einen Tag) speichern und dann an einen Verarbeitungsstandort 8 entladen oder sie sofort und schrittweise an diesen Standort 8 weiterleiten.

Die von der mobilen Einheit 7 abgerufenen Rohmessdaten müssen nicht den gesamten Zeitabschnitt seit der letzten Durchfahrt der Einheit umfassen. Jedoch können zusätzliche Daten, insbesondere Hintergrundinformationen (beispielsweise Alarme, ein Verbrauchsindex, etc.), gleichzeitig bei jeder Übertragung von einem bestimmten Sensor 1 an die mobile Einheit 7 übertragen werden.

Es kann sogar gegebenenfalls vorgesehen sein, während der nahen Vorbeifahrt der mobilen Einheit 7 eine bidirektionale Kommunikation mit dem betreffenden Sensor 1 für den Austausch von Zusatzinformationen oder eine Parametrierung oder Aktualisierung des Sensors 1 herzustellen.

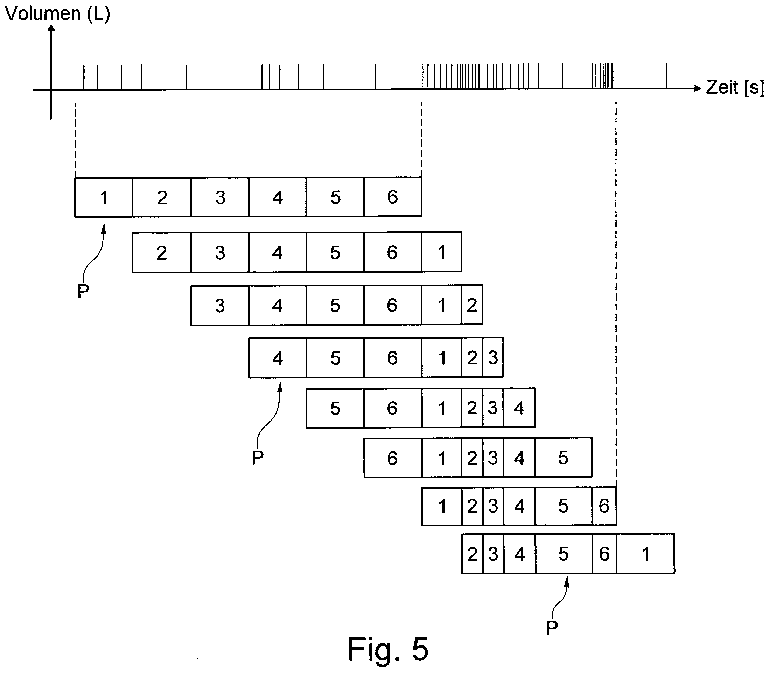

Wie in den Figuren 4 und 5 als Beispiel dargestellt, kann vorgesehen sein, die komprimierten Rohmessdaten durch Formatierung in PAⱼ-Pakete, deren Größe einen vorgegebenen Maximalwert nicht überschreiten darf, zu verpacken, wobei jedes Mal, wenn die akkumulierten Daten die Größe eines Pakets (PAⱼ) erreichen, eine neue Übertragung ausgelöst wird, sofern das vorgegebene Zeitintervall nicht vorher abgelaufen ist.

Im Ausführungsbeispiel (siehe Figur 3) werden nach einer Zeitspanne T_{E} - T_{E-1} die zeitgestempelten Impulse PU₁ bis PU_{N} in ein Datenpaket PAⱼ geschrieben, entweder weil die Zeitspanne T_{E} - T_{E-1} dem vorgegebenen Zeitintervall entspricht oder weil durch N zeitgestempelte Impulse PUᵢ der Maximalwert der Größe eines Datenpakets PAⱼ erreicht ist. Sechs solche Datenpakete PA₁ bis PA₆ werden sodann in ein Datentelegramm P aufgenommen und übertragen (siehe Figur 4).

Um auch bei schlechter Funkverbindungsqualität einen zuverlässigen und vollständigen Abruf der Rohmessdaten zu gewährleisten, wird die Datenübertragung redundant, vorteilhafterweise mehrfach, beispielsweise mindestens dreifach, vorzugsweise mindestens fünffach durchgeführt.

In Übereinstimmung mit einem möglichen praktischen Aspekt der Erfindung, der in Figur 5 dargestellt ist, wird die Redundanz bei der Übertragung durch wiederholte Übertragung desselben PAⱼ-Daten-Pakets durch mehrere aufeinanderfolgende Übertragungsvorgänge erreicht. Jeder Übertragungsvorgang kann mindestens die letzten drei, vorzugsweise mindestens die letzten fünf gebildeten PAⱼ-Pakete umfassen (Figur 5 zeigt eine Redundanz von 5; neben dem neuesten Datenpaket PA₆ werden auch die fünf vorherigen Datenpakete PA₁ bis PA₅ in das Datentelegramm P aufgenommen und übertragen, bei der nächsten Übertragung neben dem Datenpaket PA₁ auch die Datenpakete PA₂ bis PA₆ usw.).

Gemäß einer Variante der Erfindung wird die Rohdatenkomprimierung verlustfrei durchgeführt.

Gemäß einer weiteren Erfindungsvariante wird die Rohdatenkomprimierung mit einem vorgegebenen zulässigen Verlustniveau durchgeführt. In der Tat kann, wenn der Benutzer oder Betreiber die Energieeinsparung bevorzugt und eine gewisse Ungenauigkeit bei der Wiederherstellung und Wiedergabe der ursprünglichen Messdaten akzeptiert (d. h. einen gewissen Verlust akzeptiert), das Komprimierungsverhältnis dann zum Nachteil einer geringeren Genauigkeit bei der Wiedergabe auf der Empfangsseite erhöht werden.

Dieses Verlustverhältnis oder das Komprimierungsverhältnis kann als programmierbarer oder einstellbarer Parameter vorgesehen werden, der den Komprimierungsmodus bestimmt oder einstellt.

Als anschauliche und nicht beschränkende Beispiele für Datenkomprimierungsalgorithmen kann im Rahmen des erfindungsgemäßen Verfahrens in Betracht gezogen werden, eine differentielle Kodierung (Delta-Kodierung) in Verbindung mit einer Huffman-Kodierung, einer Lauflängenkodierung (RLE-Kodierung) oder vorzugsweise einer adaptiven binären arithmetischen Kodierung (CABAC-Kodierung) anzuwenden.

Darüber hinaus und ebenfalls als veranschaulichendes und nicht einschränkendes Beispiel kann das Protokoll zur Übertragung von Rohmessdaten von den betrachteten Sensoren 1 oder Zählern nach der Norm EN 13757 erfolgen, hinsichtlich der Transportschicht vorteilhafterweise nach dem Teil EN 13757-3 der Norm, hinsichtlich der physikalischen Schicht, der Verbindung und des Rahmenformats nach dem Teil EN 13757-4 der Norm und hinsichtlich der Sicherheit nach dem Teil der EN 13757-7 der Norm, vorteilhafterweise unter Anwendung des Modus 8.

Wie in Figur 4 beispielhaft dargestellt, kann vorgesehen sein, mit den PAⱼ-Paketen der PUᵢ-Rohdaten auch die Identität I des betreffenden Sensors 1 und den absoluten oder kumulierten Wert VA der/des vom betreffenden Sensor 1 gemessenen physikalischen oder physikalisch-chemischen Größe oder Parameters zu übertragen, wobei dieser Wert VA mit einem Zeitstempel versehen oder einem der elementaren zeitgestempelten Messdaten PUᵢ, beispielsweise einem Indexwert eines Fluidzählers zugeordnet ist. Der Wert VA kann - gemäß Ausführungsbeispiel - der Zählerstand des Wasserzählers zu einem bestimmten Zeitpunkt oder die Durchflussmenge durch den Wasserzähler seit einer vorherigen Datenübertragung (z. B. ΣPUᵢ = N Liter; siehe Figur 3) sein.

Das Verfahren kann auch darin bestehen, mit den PAⱼ -Paketen von PUᵢ-Rohdaten den Wert mindestens eines anderen physikalischen oder physikalisch-chemischen Parameters PPC der Umgebung des betreffenden Sensors 1 oder des von diesem letzteren gemessenen Fluids zu einem bestimmten Zeitpunkt auszulesen und zu übertragen, wie beispielsweise die Leitfähigkeit des Fluids, die Temperatur des Fluids, den pH-Wert des Fluids, den Druck des Fluids, einen Parameter, der für die Qualität und/oder die Zusammensetzung des Fluids und/oder die Temperatur der Einbauumgebung des Sensors 1 kennzeichnend ist.

Erfindungsgemäß umfasst die entfernte zentrale Verarbeitungsanlage 8 geeignete Hard- und Softwaremittel, für die Rekonstruktion der Chronogramme der jedem der Sensoren 1 zugeordneten Werte und die Ausführung von betriebswirtschaftlichen Funktionen einerseits nach der Dekomprimierung eine Auswertung der empfangenen Rohmessdaten durchzuführen, und andererseits über einen längeren Zeitabschnitt eine kumulative Speicherung der genannten Rohdaten und gegebenenfalls der aus der Verarbeitung resultierenden Daten, die von allen Sensoren 1 der mit der betrachteten Anlage 8 verbundenen Netzwerke 6 stammen, sowie der Chronogramme der entsprechenden Werte durchzuführen.

Durch die Sammlung und Speicherung aller elementaren zeitgestempelten und mit Vorzeichen versehenen Messdaten (Rohdaten), die von allen Sensoren 1 des oder eines bestimmten Netzwerks geliefert werden, ermöglicht die Erfindung alle Arten der Auswertung, Analyse, Überprüfung, Überwachung und allgemein nützlicher oder gewünschter Verarbeitung und Verwertung, da die grundlegende einzelne Rohinformation zur Verfügung steht.

So ermöglicht es die Erfindung, neben der Berechnung des Verbrauchs und des mittleren Durchflusses auf verschiedenen Ebenen (pro Sensor 1, pro Gruppe von Sensoren 1 oder im Netzwerk) auch die Erfassung einer Rückströmung, Unter- oder Überlaufberechnungen, Recherchen zu Betrug und Leckagen, den Abruf der gesamten Verbrauchshistorie usw. zentral durchzuführen.

Gegenstand der Erfindung ist auch, wie in Figur 1 schematisch dargestellt, ein System, das einerseits Sensoren 1 umfasst, die jeweils Mittel 3 zur zumindest vorübergehenden Speicherung und Aufbereitung der Rohmesswerte für ihre Übertragung umfassen oder zumindest funktionell solchen Mitteln 3 zugeordnet sind, und andererseits mindestens eine entfernte Verarbeitungsanlage 8, wie etwa ein Rechenzentrum, das zum Abrufen, Speichern und Auswerten der Rohmessdaten der verschiedenen Sensoren 1 des betrachteten geographischen Gebiets 9 sowie anderer Gebiete, die ein der Anlage 8 zugeordnetes globales Territorium abdecken, geeignet und bestimmt ist.

Jedem Sensor 1 sind Funk-Kommunikationsmittel 2, die in den betrachteten Sensor 1 integriert sind oder ein separates und abgesetztes Modul bilden, und eine autonome Stromversorgung 4 für den Sensor 1 und die vorgenannten Kommunikationsmittel 2 zugeordnet.

Dieses System ist zur Durchführung des oben beschriebenen Verfahrens geeignet und vorgesehen und dadurch gekennzeichnet, dass die Speicher- und Verarbeitungsmittel 3 jedes betreffenden Sensors 1 oder Moduls 2 einen Mikrocontroller umfassen, der dazu eingerichtet ist, eine Komprimierung der zeitgestempelten Rohmessdaten und ihre Aufbereitung in ein Format durchzuführen, das zur Funk-Übertragung gemäß einem bestimmten Protokoll geeignet ist.

Wenn der Sensor 1 nicht (wie der in Figur 2A dargestellte) mit dem Funkmodul 2 eine bauliche Einheit oder eine einheitliche Baugruppe bildet, sind mehrere alternative Konstruktionen in zwei getrennten physikalischen Unter-Baugruppen möglich (beispielsweise sind diese Unter-Baugruppen über eine Kabelverbindung für die Kommunikation und die Spannungsversorgung miteinander verbunden), d. h.:
- eine erste Unter-Baugruppe aus dem Sensor 1, dem Speicher 3 (und den Aufbereitungs- und Verarbeitungsmitteln) und der Batterie 4 und eine zweite Unter-Baugruppe, die nur dem Funkmodul 2 entspricht (Figur 2B);
- eine erste Unter-Baugruppe, die nur auf den Sensor 1 reduziert ist, und eine zweite Unter-Baugruppe, die das Funkmodul 2, den Speicher 3 (und die Aufbereitungs- und Verarbeitungsmittel) und die Batterie 4 umfasst (Figur 2C).

Die Mittel 3 zur Verarbeitung, Aufbereitung und Speicherung sind vorzugsweise auf einer Schaltung oder in einem Mikrocontroller o. ä. zusammengefasst und können bei Bedarf auch die Verwaltung des Funkmoduls 2 sicherstellen.

Erfindungsgemäß umfasst die mindestens eine Anlage 8 Hard- und Softwaremittel und ist dazu eingerichtet, einerseits für die Rekonstruktion der Chronogramme der jedem der Sensoren 1 zugeordneten Werte und die Ausführung von betriebswirtschaftlichen Funktionen nach der Dekomprimierung eine Auswertung der empfangenen Rohmessdaten durchzuführen, und andererseits über einen längeren Zeitabschnitt eine kumulative Speicherung der Rohdaten und gegebenenfalls der aus der Verarbeitung resultierenden Daten, die von allen Sensoren 1 der verbundenen Netzwerke 6 und der entsprechenden Profile stammen, durchzuführen.

Darüber hinaus kann das vorgenannte System für das oder jedes geografische Gebiet 9, in dem die betreffenden Sensoren 1 installiert sind, ein festes Konzentratormodul 5 umfassen, das mit den Sensoren 1 des Gebiets 9, das ihm zugewiesen ist, ein drahtloses lokales Netzwerk 6 bildet, dessen Master es ist und dessen Slaves die Sensoren 1 sind, wobei das genannte feste Konzentratormodul 5 auch, beispielsweise über eine Internetverbindung 10, mit der genannten mindestens einen entfernten Verarbeitungsanlage 8 verbunden ist.

Diese konstruktive Option unter Verwendung von Konzentratormodulen 5 auf mindestens einem Teil eines geografischen Gebietes kann realisiert werden, wenn eine zuverlässige direkte Übertragung zwischen den Sensoren 1 und der Anlage 8 nicht möglich ist oder einen zu hohen Verbrauch der Sensoren 1 erfordert.

Vorteilhafterweise umfasst dieses System auch mindestens eine mobile Funk-Fernausleseeinheit 7, die beispielsweise in einem Kraftfahrzeug montiert ist und die geeignet und dazu bestimmt ist, entweder nach dem vorherigen Senden einer entsprechenden Abfrage der mobilen Einheit 7 an den betrachteten Sensor 1 oder automatisch in regelmäßigen Abständen, während der Vorbeifahrt in der Nähe eines betrachteten Sensors 1 die Rohmessdaten 'on the fly' zu sammeln.

Alternativ oder auch zusätzlich kann eine temporär stationäre Funk-Fernausleseeinheit 7 vorgesehen sein, die bei Bedarf zu einem gewünschten Zeitpunkt oder während eines gewünschten Zeitraums an einem bestimmten Ort (in oder auf einem Gebäude, auf einem Gelände, in einem parkenden Fahrzeug o. ä.) installiert bzw. eingesetzt wird und ebenfalls nach dem vorherigen Senden einer entsprechenden Abfrage an den betrachteten Sensor 1 oder automatisch in regelmäßigen Abständen die Rohmessdaten sammelt.

Die bisher im Zusammenhang mit einem solchen (mobilen oder stationären) Fernausleseverfahren gemachten Aussagen bleiben gültig.

Vorzugsweise und in Verbindung mit einer der Bedingungen für die Übertragungswiederholung bilden die Speichermittel 3 jedes Sensors 1 einen Pufferspeicher und sind geeignet und dazu eingerichtet, den Inhalt mehrerer PAⱼ-Pakete von Rohmessdaten im komprimierten Zustand zu speichern, wobei der Inhalt oder ein Teil des Inhalts dieses Pufferspeichers bei jeder Uplink-Übertragung von dem betreffenden Sensor 1, erfindungsgemäß redundant wie oben angegeben, übertragen wird.

Die von jeder mobilen Einheit 7 gesammelten Informationen werden direkt oder indirekt an die Anlage 8 oder die Steuerungsanlage 11 des Eigentümers und/oder Betreibers des zugehörigen Netzwerks von Sensoren 1 (und Verteilungsnetzwerks) übermittelt, der auch die "Business"-Funktionen definiert, welche in dieser Verarbeitungseinrichtung 8 auszuführen sind (wobei deren Ressourcen und gespeicherte Daten ihm zur Verfügung gestellt werden).

Selbstverständlich ist die Erfindung nicht auf die in den beigefügten Zeichnungen beschriebenen und dargestellten Ausführungsformen beschränkt. Der Schutzbereich der Erfindung ist definiert durch die folgenden Patentansprüche.
- 1: Sensor
- 2: Funk-Kommunikationsmittel
- 3: Speichermittel
- 4: Energiequelle
- 5: Konzentratormodul
- 6: Netzwerk
- 7: Funk-Fernausleseeinheit
- 8: Verarbeitungsanlage
- 9: geographisches Gebiet
- 10: Internetverbindung
- PUᵢ: elementare Messeinheit
- PAⱼ: Datenpaket
- I: Identität
- VA: Wert
- PPC: Umgebungsparameter

## Patentansprüche

1. Verfahren zum Sammeln von Daten, die von jeweils mindestens ein Messelement enthaltenden Sensoren (1) geliefert werden, die lokal angeordnet und Funk-Kommunikationsmitteln (2) zugeordnet sind, welche Funk-Kommunikationsmittel (2) in den jeweiligen Sensoren (1) integriert sind oder abgesetzte Module bilden, wobei diese Sensoren (1) und/oder diese Module Speichermittel (3) zum Speichern und Aufbereiten von durch die jeweiligen Messelemente aufgenommenen Messsignalen sowie eine autonome Energiequelle (4) für den Sensor (1) und die Funk-Kommunikationsmittel (2) umfassen,
wobei das Verfahren mindestens die folgenden Schritte umfasst:
Aufnehmen aufeinanderfolgender Rohmessdaten, die zeitgestempelten, von dem Messelement des jeweiligen Sensors (1) gelieferten elementaren Messeinheiten (PUᵢ) mindestens einer physikalischen oder physikalisch-chemischen Größe oder mindestens eines physikalischen oder physikalisch-chemischen Parameters entsprechen, in jedem betreffenden Sensor (1), wobei
die von dem Messelement des jeweiligen Sensors (1) gelieferten elementare Messeinheiten (PUᵢ) einen der Auflösung des jeweiligen Messelements oder einem Vielfachen davon entsprechenden Wert einer physikalischen oder physikalisch-chemischen Größe oder eines physikalischen oder physikalisch-chemischen Parameters oder eine der Auflösung des jeweiligen Messelements oder einem Vielfachen davon entsprechende Änderung einer physikalischen oder physikalisch-chemischen Grö-ße oder eines physikalischen oder physikalisch-chemischen Parameters darstellen,
in Übereinstimmung mit der Auflösung des betrachteten Sensors (1),
wobei jede zeitgestempelte elementare Messeinheit (PUᵢ) aus einem zeitgestempelten Impuls besteht, so dass die elementaren Messeinheiten (PUᵢ) genaue Datierungen von Rohmessdaten darstellen,
Abspeichern dieser Rohmessdaten in den Speichermitteln (3) des Sensors (1) oder des Moduls,
Übertragen der unverarbeiteten Rohmessdaten in komprimierter Form über eine Funkstrecke, wobei es umfasst, die komprimierten Rohmessdaten durch Formatierung in Datenpaketen (PAⱼ) vorbestimmter fester Größe zu verpacken, wiederholt und bedingt jeweils nach Erreichen der Größe eines Datenpakets (PAⱼ) an akkumulierten komprimierten Rohmessdaten oder nach Ablauf eines vorgegebenen Zeitintervalls und nach Erreichen der Größe eines Datenpakets (PAⱼ) an akkumulierten komprimierten Rohmessdaten, die seit einer vorherigen Übertragung angesammelt wurden, wobei
die Datenübertragung mit einer Redundanz durchgeführt wird, wobei vorgesehen ist, dass die Redundanz in der Übertragung durch wiederholtes Senden desselben Datenpakets (PAⱼ) in mehreren aufeinanderfolgenden Übertragungsvorgängen erreicht wird, und
Sammeln, Speichern und Auswerten der von einer Vielzahl von Sensoren (1) übertragenen Rohmessdaten in einer entfernten zentralen Verarbeitungsanlage (8),
welche geeignete Hard- und Softwaremittel umfasst, einerseits nach der Dekomprimierung eine Auswertung der empfangenen Rohmessdaten für die Rekonstruktion von Chronogrammen der jedem der Sensoren (1) zugeordneten Messeinheiten (PUᵢ) und andererseits über einen ausschlaggebenden Zeitabschnitt eine kumulative Speicherung der genannten Rohmessdaten und gegebenenfalls der aus der Verarbeitung resultierenden Daten, die von allen Sensoren (1) von mit der betrachteten Verarbeitungsanlage (8) verbundenen Netzwerken (6) stammen, und der Chronogramme der entsprechenden Werte durchzuführen.

2. Verfahren nach Anspruch 1, **dadurch gekennzeichnet, dass** die von dem Messelement des jeweiligen Sensors (1) gelieferten elementare Messeinheiten (PUᵢ) mit einem Vorzeichen versehen sind.

3. Verfahren nach Anspruch 1 oder 2, **dadurch gekennzeichnet, dass** die oder eine der gemessene(n) physikalische(n) Größe(n) sich auf ein Strömungsmedium bezieht, wobei jede zeitgestempelte elementare Messeinheit (PUᵢ) einer von dem Messelement des jeweiligen Sensors (1) auf der Basis seiner Messgenauigkeit gemessenen elementaren Fluidmenge entspricht, und/oder dass die oder eine der gemessene(n) physikalisch-chemische(n) Größe(n) ausgewählt ist aus der Gruppe, die gebildet wird durch die Temperatur, den pH-Wert, die Leitfähigkeit und den Druck eines durch den betreffenden Sensor (1) hindurchströmenden oder von diesem kontaktierten Fluids, und/oder dass der oder einer der gemessene(n) physikalische(n) oder chemisch-physikalische(n) Parameter kennzeichnend ist für die Qualität und/oder Zusammensetzung eines Fluids, das durch den betreffenden Sensor (1) strömt oder von diesem kontaktiert wird, wie beispielsweise Trübung, das Vorhandensein von Schadstoffen oder das Vorhandensein eines festen und/oder gasförmigen Anteils bzw. fester und/oder gasförmiger Anteile.

4. Verfahren nach einem der Ansprüche 1 bis 3, **dadurch gekennzeichnet, dass** es umfasst, eine neue Datenübertragung in Form einer Nachricht oder eines Telegramms durchzuführen, sobald mindestens eine der beiden Bedingungen
a) Ablauf eines vorgegebenen Zeitintervalls und
b) Erreichen einer vorgegebenen Menge an komprimierten gesammelten Daten seit der vorherigen Übertragung
erfüllt ist.

5. Verfahren nach einem der Ansprüche 1 bis 4, **dadurch gekennzeichnet, dass** es umfasst, insbesondere wenn mindestens eine der Bedingungen erfüllt ist, die komprimierten und formatierten Rohmessdaten jedes betreffenden Sensors (1) über eine Funkstrecke insbesondere in Abhängigkeit von der verwendeten Funkübertragungstechnik, der Leistung der Kommunikationsmittel (2) der verschiedenen Sensoren (1) und/oder ihrer jeweiligen Standorte entweder an ein festes Konzentratormodul (5), das ein lokales Netzwerk (6) einer Vielzahl von Sensoren (1) verwaltet und anspricht, welche ihm zugeordnet sind und für welche er zumindest die Uplink-Übertragungen verwaltet, oder direkt an die Verarbeitungsanlage (8) zu übertragen.

6. Verfahren nach einem der Ansprüche 1 bis 5, **dadurch gekennzeichnet, dass** es umfasst, für jeden betreffenden Sensor (1) die komprimierten Rohmessdaten über eine Funkstrecke an eine mobile Funk-Fernausleseeinheit (7) - nach Erhalt einer entsprechenden Abfrage von dieser letztgenannten oder automatisch in regelmäßigen Abständen - zu übertragen.

7. Verfahren nach einem der Ansprüche 1 bis 6, **dadurch gekennzeichnet, dass** es hinsichtlich der Aufbereitung umfasst, die gespeicherten Rohmesswerte zu komprimieren oder zu verdichten und sie in ein für die Funkübertragung geeignetes Format zu bringen, wenn mindestens eine der Bedingungen erfüllt ist, die komprimierten und formatierten Daten an ein festes Konzentratormodul (5), das Teil eines drahtlosen lokalen Netzwerks (6) ist, zu übertragen und anschließend die komprimierten und formatierten Daten zur zentralen Auswertung zusammen mit den komprimierten und formatierten Daten jedes der anderen Sensoren (1), die Teil desselben Netzwerks (6) sind, beispielsweise über eine Internetverbindung (10) an eine entfernte Verarbeitungsanlage (8), wie ein Rechenzentrum oder dergleichen, weiterzuleiten.

8. Verfahren nach einem der Ansprüche 1 bis 7, **dadurch gekennzeichnet, dass** die Komprimierung der Rohmessdaten verlustfrei durchgeführt wird oder dass die Komprimierung der Rohmessdaten mit einem vorgegebenen zulässigen Verlustniveau durchgeführt wird.

9. Verfahren nach einem der Ansprüche 1 bis 8, **dadurch gekennzeichnet, dass** es umfasst, mit den Datenpaketen (PAⱼ) der Rohmessdaten auch die Identität (I) des betreffenden Sensors (1) und den absoluten oder kumulierten Wert (VA) der von dem betreffenden Sensor (1) gemessenen physikalischen oder physikalisch-chemischen Größe oder des von dem betreffenden Sensor (1) gemessenen physikalischen oder physikalisch-chemischen Parameters zu übertragen, wobei dieser Wert (VA) mit einem Zeitstempel versehen oder einem der zeitgestempelten elementaren Messeinheiten (PUᵢ), beispielsweise einem Indexwert eines Fluidzählers, zugeordnet ist.

10. Verfahren nach einem der Ansprüche 1 bis 9, **dadurch gekennzeichnet, dass** es auch umfasst, mit den Datenpaketen (PAⱼ) den Wert mindestens eines anderen physikalischen oder physikalisch-chemischen Umgebungsparameters (PPC) der Umgebung des betreffenden Sensors (1) oder des von diesem gemessenen Fluids zu einem bestimmten Zeitpunkt auszulesen und zu übertragen, wie beispielsweise: die Leitfähigkeit des Fluids, die Temperatur des Fluids, den pH-Wert des Fluids, den Druck des Fluids, einen Parameter, der die Qualität und/oder die Zusammensetzung des Fluids und/oder die Temperatur der Einbauumgebung des Sensors (1) kennzeichnet.

11. System zur Fernauslesung von in einem bestimmten geographischen Gebiet (9) installierten Sensoren (1) und zur Auswertung der ausgelesenen Daten,
wobei dieses System einerseits Sensoren (1) umfasst, die jeweils Speichermittel (3) zur zumindest vorübergehenden Speicherung und Aufbereitung von Rohmesswerten für deren Übertragung umfassen oder zumindest funktionell solchen Speichermitteln (3) zugeordnet sind, und andererseits mindestens eine entfernte Verarbeitungsanlage (8), wie etwa ein Rechenzentrum, das zum Abrufen, Speichern und Auswerten der Rohmessdaten der verschiedenen Sensoren (1) des betrachteten geographischen Gebiets (9) sowie aus anderen Gebieten, die ein der Verarbeitungsanlage (8) zugeordnetes globales Territorium abdecken, geeignet und bestimmt ist,
wobei jedem Sensor (1) Funk-Kommunikationsmittel (2) zugeordnet sind, die in den betreffenden Sensor (1) integriert sind oder ein separates und abgesetztes Modul bilden,
wobei autonome Energiequellen (4) für die Sensoren (1) und die Funk-Kommunikationsmittel (2) vorgesehen sind,
und das System zur Durchführung des Verfahrens nach einem der Ansprüche 1 bis 10 geeignet und bestimmt ist,
wobei die Speichermittel (3) jedes betreffenden Sensors (1) oder Moduls einen Mikrocontroller umfassen, der dazu eingerichtet ist, eine Komprimierung der zeitgestempelten Rohmessdaten und ihre Aufbereitung in ein Format durchzuführen, das zur Funkübertragung gemäß einem festgelegten Protokoll geeignet ist, um die komprimierten Rohmessdaten durch Formatierung in Datenpaketen (PAⱼ) vorbestimmter fester Größe zu verpacken, wiederholt und bedingt jeweils nach Erreichen der Größe eines Datenpakets (PAⱼ) an akkumulierten komprimierten Rohmessdaten oder nach Ablauf eines vorgegebenen Zeitintervalls und nach Erreichen der Größe eines Datenpakets (PAⱼ) an akkumulierten komprimierten Rohmessdaten, die seit einer vorherigen Übertragung angesammelt wurden, und wobei
die zeitgestempelten, von dem Messelement des jeweiligen Sensors (1) gelieferten elementaren Messeinheiten (PUᵢ) mindestens einer physikalischen oder physikalisch-chemischen Größe oder mindestens eines physikalischen oder physikalisch-chemischen Parameters entsprechen, wobei
die von dem Messelement des jeweiligen Sensors (1) gelieferten elementare Messeinheiten (PUᵢ) einen der Auflösung des jeweiligen Messelements oder einem Vielfachen davon entsprechenden Wert einer physikalischen oder physikalisch-chemischen Größe oder eines physikalischen oder physikalisch-chemischen Parameters oder eine der Auflösung des jeweiligen Messelements oder einem Vielfachen davon entsprechende Änderung einer physikalischen oder physikalisch-chemischen Grö-ße oder eines physikalischen oder physikalisch-chemischen Parameters darstellen,
in Übereinstimmung mit der Auflösung des betrachteten Sensors (1),
wobei jede zeitgestempelte elementare Messeinheit (PUᵢ) aus einem zeitgestempelten Impuls besteht, so dass die elementaren Messeinheiten (PUᵢ) genaue Datierungen von Rohmessdaten darstellen, wobei
die Datenübertragung mit einer Redundanz durchgeführt wird, wobei vorgesehen ist, dass die Redundanz in der Übertragung durch wiederholtes Senden desselben Datenpakets (PAⱼ) in mehreren aufeinanderfolgenden Übertragungsvorgängen erreicht wird,
und dass die mindestens eine Verarbeitungsanlage (8) Hard- und Softwaremittel umfasst und dazu eingerichtet ist, einerseits nach der Dekomprimierung eine Auswertung der empfangenen Rohmessdaten für die Rekonstruktion von Chronogrammen der jedem der Sensoren (1) zugeordneten Messeinheiten (PUᵢ) und für die Ausführung von betriebswirtschaftlichen Funktionen durchzuführen und andererseits über einen bestimmten Zeitabschnitt eine kumulative Speicherung der Rohmessdaten und gegebenenfalls der aus deren Verarbeitung resultierenden Daten, die von allen Sensoren (1) angeschlossener Netzwerke (6) stammen, und gegebenenfalls entsprechender Profile durchzuführen.

12. System nach Anspruch 11, **dadurch gekennzeichnet, dass** es für das oder jedes geographische Gebiet (9), in dem betreffende Sensoren (1) installiert sind, ein festes Konzentratormodul (5) umfasst, das mit den Sensoren (1) des ihm zugewiesenen Gebiets (9) ein drahtloses lokales Netzwerk (6) bildet, in welchem es der Master ist und die Sensoren (1) die Slaves sind, wobei das feste Konzentratormodul (5) außerdem, beispielsweise über eine Internetverbindung (10), mit der mindestens einen entfernten Verarbeitungsanlage (8) verbunden ist.

13. System nach Anspruch 11 oder 12, **dadurch gekennzeichnet, dass** es auch mindestens eine mobile oder temporär stationäre Funk-Fernausleseeinheit (7) umfasst, die beispielsweise in einem Kraftfahrzeug, in oder auf einem Gebäude oder auf einem Gelände montiert bzw. installiert ist und die geeignet und dazu bestimmt ist, entweder nach dem vorherigen Senden einer entsprechenden Abfrage der Funk-Fernausleseeinheit (7) an einen betrachteten Sensor (1) oder automatisch in regelmäßigen Abständen die Rohmessdaten während der Vorbeifahrt in der Nähe des betrachteten Sensors (1) 'on the fly', zu einem bestimmten Zeitpunkt oder während eines bestimmten Zeitraums, zu sammeln.

14. System nach einem der Ansprüche 11 bis 13, **dadurch gekennzeichnet, dass** die Speichermittel (3) jedes Sensors (1) einen Pufferspeicher bilden und geeignet und dazu eingerichtet sind, den Inhalt mehrerer Pakete (PAⱼ) von Rohmessdaten im komprimierten Zustand zu speichern, wobei der Inhalt oder ein Teil des Inhalts dieses Pufferspeichers bei jeder Uplink-Übertragung von dem betreffenden Sensor (1) übertragen wird.

## Claims

1. Method for collecting data provided by sensors (1) which each contain at least one measurement element, are arranged locally and are assigned to radio communication means (2), which radio communication means (2) are integrated in the respective sensors (1) or form detached modules, wherein these sensors (1) and/or these modules comprise storage means (3) for storing and conditioning measurement signals recorded by the respective measurement elements and an autonomous energy source (4) for the sensor (1) and the radio communication means (2), wherein the method comprises at least the following steps:
recording successive raw measured data, which correspond to time-stamped elementary measurement units (PUᵢ) of at least one physical or physico-chemical variable or of at least one physical or physico-chemical parameter which are provided by the measurement element of the respective sensor (1), in each relevant sensor (1), wherein
the elementary measurement units (PUᵢ) provided by the measurement element of the respective sensor (1) represent a value of a physical or physico-chemical variable or of a physical or physico-chemical parameter that corresponds to the resolution of the respective measurement element or a multiple thereof or represent a change in a physical or physico-chemical variable or a physical or physico-chemical parameter that corresponds to the resolution of the respective measurement element or a multiple thereof,
in accordance with the resolution of the sensor (1) under consideration,
wherein each time-stamped elementary measurement unit (PUᵢ) consists of a time-stamped pulse, with the result that the elementary measurement units (PUᵢ) represent exact dates of raw measurement data,
storing these raw measurement data in the storage means (3) of the sensor (1) or of the module,
transmitting the unprocessed raw measurement data in compressed form via a radio path, wherein it comprises packaging the compressed raw measurement data, by means of formatting, into data packets (PAⱼ) of a predetermined fixed size, repeatedly and in each case after the size of a data packet (PAⱼ) of accumulated compressed raw measurement data has been reached or after a predefined interval of time has expired and after the size of a data packet (PAⱼ) of accumulated compressed raw measurement data collected since a previous transmission has been reached, wherein
the data transmission is carried out with a redundancy, wherein provision is made for the redundancy in the transmission to be achieved by repeatedly transmitting the same data packet (PAⱼ) in a plurality of successive transmission operations, and
collecting, storing and evaluating the raw measurement data transmitted by a multiplicity of sensors (1) in remote central processing system (8),
which comprises suitable hardware and software means, on the one hand for evaluating the received raw measurement data after decompression in order to reconstruct chronograms of the measurement units (PUᵢ) assigned to each of the sensors (1), and on the other hand for cumulatively storing said raw measurement data, and possibly the data which result from the processing and come from all sensors (1) of networks (6) connected to the processing system (8) under consideration, and the chronograms of the corresponding values over a decisive period of time.

2. Method according to Claim 1, **characterized in that** the elementary measurement units (PUᵢ) provided by the measurement element of the respective sensor (1) are provided with a sign.

3. Method according to Claim 1 or 2, **characterized in that** the or one of the measured physical variable (s) relates to a flow medium, wherein each time-stamped elementary measurement unit (PUᵢ) corresponds to an elementary amount of fluid measured by the measurement element of the respective sensor (1) on the basis of its measurement accuracy, and/or **in that** the or one of the measured physico-chemical variable(s) is selected from the group formed from the temperature, the pH value, the conductivity and the pressure of a fluid flowing through the relevant sensor (1) or contacted by the latter, and/or **in that** the or one of the measured physical or chemico-physical parameter(s) is characteristic of the quality and/or composition of a fluid that flows through the relevant sensor (1) or is contacted by the latter, for example turbidity, the presence of pollutants or the presence of a solid and/or gaseous component or solid and/or gaseous components.

4. Method according to one of Claims 1 to 3, **characterized in that** it comprises carrying out a new data transmission in the form of a message or telegram as soon as at least one of the two conditions
a) expiry of a predefined interval of time and
b) reaching of a predefined amount of compressed collected data since the previous transmission has been met.

5. Method according to one of Claims 1 to 4, **characterized in that** it comprises, in particular when at least one of the conditions has been met, transmitting the compressed and formatted raw measurement data from each relevant sensor (1) via a radio path, in particular on the basis of the radio transmission technology used, the power of the communication means (2) of the various sensors (1) and/or their respective locations, either to a fixed concentrator module (5) which manages and addresses a local area network (6) comprising a multiplicity of sensors (1) which are assigned to it and for which it manages at least the uplink transmissions, or directly to the processing system (8).

6. Method according to one of Claims 1 to 5, **characterized in that** it comprises transmitting the compressed raw measurement data for each relevant sensor (1) via a radio path to a mobile radio remote reading unit (7) - after receiving a corresponding request from the latter or automatically at regular intervals.

7. Method according to one of Claims 1 to 6, **characterized in that** it comprises, with regard to the processing, compressing or compacting the stored raw measured values and converting them into a format suitable for the radio transmission if at least one of the conditions has been met, transmitting the compressed and formatted data to a fixed concentrator module (5) which is part of a wireless local area network (6) and then forwarding the compressed and formatted data, together with the compressed and formatted data from each of the other sensors (1) which are part of the same network (6), for central evaluation to a remote processing system (8), such as a computing centre or the like, for example via an Internet connection (10).

8. Method according to one of Claims 1 to 7, **characterized in that** the raw measurement data are compressed without loss, or **in that** the raw measurement data are compressed with a predefined permissible loss level.

9. Method according to one of Claims 1 to 8, **characterized in that** it comprises also transmitting, with the data packets (PAⱼ) of the raw measurement data, the identity (I) of the relevant sensor (1) and the absolute or cumulated value (VA) of the physical or physico-chemical variable measured by the relevant sensor (1) or of the physical or physico-chemical parameter measured by the relevant sensor (1), wherein this value (VA) is provided with a time stamp or is assigned to one of the time-stamped elementary measurement units (PUᵢ), for example an index value of a fluid meter.

10. Method according to one of Claims 1 to 9, **characterized in that** it also comprises reading and transmitting, with the data packets (PAⱼ), the value of at least one other physical or physico-chemical environmental parameter (PPC) of the environment of the relevant sensor (1) or of the fluid measured by the latter at a particular time, for example: the conductivity of the fluid, the temperature of the fluid, the pH value of the fluid, the pressure of the fluid, a parameter indicating the quality and/or the composition of the fluid and/or the temperature of the installation environment of the sensor (1).

11. System for remotely reading sensors (1) installed in a specific geographical area (9) and for evaluating the data which have been read,
wherein this system comprises, on the one hand, sensors (1) which each comprise storage means (3) for at least temporarily storing and processing raw measured values for their transmission or are at least functionally assigned to such storage means (3), and on the other hand at least one remote processing system (8), for instance a computing centre, which is suitable and intended for retrieving, storing and evaluating the raw measurement data from the various sensors (1) in the geographical area (9) under consideration and from other areas which cover a global territory assigned to the processing system (8),
wherein radio communication means (2) which are integrated in the relevant sensor (1) or form a separate and detached module are assigned to each sensor (1),
wherein autonomous energy sources (4) are provided for the sensors (1) and the radio communication means (2),
and the system is suitable and intended for carrying out the method according to one of Claims 1 to 10,
wherein the storage means (3) of each relevant sensor (1) or module comprise a microcontroller which is configured to compress the time-stamped raw measurement data and to process them into a format which is suitable for the radio transmission according to a stipulated protocol in order to package the compressed raw measurement data, by means of formatting, into data packets (PAⱼ) of a predetermined fixed size, repeatedly and in each case after the size of a data packet (PAⱼ) of accumulated compressed raw measurement data has been reached or after a predefined interval of time has expired and after the size of a data packet (PAⱼ) of accumulated compressed raw measurement data collected since a previous transmission has been reached, and wherein
the time-stamped elementary measurement units (PUᵢ) provided by the measurement element of the respective sensor (1) correspond to at least one physical or physico-chemical variable or at least one physical or physico-chemical parameter, wherein
the elementary measurement units (PUᵢ) provided by the measurement element of the respective sensor (1) represent a value of a physical or physico-chemical variable or of a physical or physico-chemical parameter that corresponds to the resolution of the respective measurement element or a multiple thereof or a change in a physical or physico-chemical variable or a physical or physico-chemical parameter that corresponds to the resolution of the respective measurement element or a multiple thereof,
in accordance with the resolution of the sensor (1) under consideration,
wherein each time-stamped elementary measurement unit (PUᵢ) consists of a time-stamped pulse, with the result that the elementary measurement units (PUᵢ) represent exact dates of raw measurement data, wherein
the data transmission is carried out with a redundancy, wherein provision is made for the redundancy in the transmission to be achieved by repeatedly transmitting the same data packet (PAⱼ) in a plurality of successive transmission operations,
and the at least one processing system (8) comprises hardware and software means and is configured on the one hand to evaluate the received raw measurement data after decompression in order to reconstruct chronograms of the measurement units (PUᵢ) assigned to each of the sensors (1) and in order to perform operational functions and on the other hand to cumulatively store the raw measurement data, and possibly the data which result from the processing of the latter and come from all sensors (1) of connected networks (6), and possibly corresponding profiles over a certain period of time.

12. System according to Claim 11, **characterized in that** it comprises, for the or each geographical area (9) in which relevant sensors (1) are installed, a fixed concentrator module (5) which forms, with the sensors (1) in the area (9) assigned to it, a wireless local area network (6) in which it is the master and the sensors (1) are the slaves, wherein the fixed concentrator module (5) is also connected to the at least one remote processing system (8), for example via an Internet connection (10).

13. System according to Claim 11 or 12, **characterized in that** it also comprises at least one mobile or temporarily stationary radio remote reading unit (7) which is mounted or installed, for example, in a motor vehicle, in or on a building or on premises and is suitable and intended for collecting the raw measurement data "on-the-fly", either after the previous transmission of a corresponding request from the radio remote reading unit (7) to a sensor (1) under consideration or automatically at regular intervals, while moving past in the vicinity of the sensor (1) under consideration at a specific time or during a specific period.

14. System according to one of Claims 11 to 13, **characterized in that** the storage means (3) of each sensor (1) form a buffer memory and are suitable and configured to store the content of a plurality of packets (PAⱼ) of raw measurement data in the compressed state, wherein the content or a part of the content of this buffer memory is transmitted during each uplink transmission from the relevant sensor (1).

## Revendications

1. Procédé permettant de collecter des données qui sont fournies par des capteurs (1) comportant respectivement au moins un élément de mesure qui sont disposés localement et sont associés à des moyens de communication radio (2), lesquels moyens de communication radio (2) sont intégré dans les capteurs (1) respectifs ou forment des modules éloignés, dans lequel lesdits capteurs (1) et/ou lesdits modules comprennent des moyens de stockage (3) pour stocker et préparer des signaux de mesure enregistrés par les éléments de mesure respectifs, ainsi qu'une source d'énergie autonome (4) pour le capteur (1) et les moyens de communication radio (2),
dans lequel le procédé comprend au moins les étapes suivantes consistant à :
enregistrer des données de mesure brutes consécutives qui correspondent à des unités de mesure élémentaires (PUᵢ) horodatées, fournies par l'élément de mesure du capteur (1) respectif, d'au moins une grandeur physique ou physico-chimique ou d'au moins un paramètre physique ou physico-chimique, sur chaque capteur (1) concerné, dans lequel
les unités de mesure élémentaires (PUᵢ) fournies par l'élément de mesure du capteur (1) respectif représentent une valeur correspondant à la résolution de l'élément de mesure respectif ou à un multiple de celle-ci d'une grandeur physique ou physico-chimique ou d'un paramètre physique ou physico-chimique, ou représentent une variation correspondant à la résolution de l'élément de mesure respectif ou à un multiple de celle-ci d'une grandeur physique ou physico-chimique ou d'un paramètre physique ou physico-chimique,
conformément à la résolution du capteur (1) en question,
dans lequel chaque unité de mesure élémentaire (PUᵢ) horodatée est composée d'une impulsion horodatée de sorte que les unités de mesure élémentaires (PUᵢ) représentent des datations précises de données de mesure brutes,
sauvegarder lesdites données de mesure brutes dans les moyens de stockage (3) du capteur (1) ou du module,
transmettre les données de mesure brutes non traitées sous forme comprimée par une voie radio, dans lequel le procédé comprend le fait de conditionner les données de mesure brutes comprimées en les formatant dans des paquets de données (PAⱼ) de taille fixe prédéterminée, de manière répétée et conditionnelle, respectivement après que la taille d'un paquet de données (PAⱼ) de données de mesure brutes comprimées accumulées a été atteinte, ou après qu'un intervalle de temps prédéfini a expiré et après que la taille d'un paquet de données (PAⱼ) de données de mesure brutes comprimées accumulées qui ont été collectées depuis une transmission précédentes a été atteinte, dans lequel
la transmission de données est effectuée de manière redondante, dans lequel il est prévu que la redondance de la transmission soit atteinte par un envoi répété du même paquet de données (PAⱼ) dans plusieurs opérations de transmission consécutives, et
collecter, stocker et analyser les données de mesure brutes transmises par une pluralité de capteurs (1) dans une installation de traitement centrale distante (8)
qui comprend des moyens matériels et logiciels appropriés, pour effectuer d'une part après la décompression une analyse des données de mesure brutes reçues pour la reconstruction de chronogrammes des unités de mesure (PUᵢ) associées à chacun des capteurs (1), et pour effectuer d'autre part pendant une période de temps décisive un stockage cumulatif desdites données de mesure brutes et le cas échéant des données résultant du traitement qui proviennent de tous les capteurs (1) issus de réseaux (6) reliés à l'installation de traitement (8) en question, et des chronogrammes des valeurs correspondantes.

2. Procédé selon la revendication 1, **caractérisé en ce que** les unités de mesure élémentaires (PUᵢ) fournies par l'élément de mesure du capteur (1) sont signées.

3. Procédé selon la revendication 1 ou 2, **caractérisé en ce que** la ou l'une des grandeurs physiques mesurées fait référence à un milieu fluide, dans lequel chaque unité de mesure élémentaire (PUᵢ) horodatée correspond à une quantité de fluide élémentaire mesurée par l'élément de mesure du capteur (1) respectif sur la base de sa précision de mesure, et/ou **en ce que** la ou l'une des grandeurs physico-chimiques mesurées est sélectionnée dans le groupe qui est formé par la température, le pH, la conductivité et la pression d'un fluide passant par le capteur (1) concerné ou en contact avec celui-ci, et/ou **en ce que** le ou l'un des paramètres physiques ou chimio-physiques caractérise la qualité et/ou la composition d'un fluide qui passe par le capteur (1) concerné ou est en contact avec celui-ci, comme par exemple la turbidité, la présence de polluants ou la présence d'une fraction solide et/ou gazeuse ou de fractions solides et/ou gazeuses.

4. Procédé selon l'une quelconque des revendications 1 à 3, **caractérisé en ce qu'**il comprend le fait d'effectuer une retransmission de données sous la forme d'un message ou d'un télégramme dès qu'au moins l'une des deux conditions
a) expiration d'un intervalle de temps prédéfini, et
b) atteinte d'une quantité prédéfinie de données collectées comprimées depuis la transmission précédente est satisfaite.

5. Procédé selon l'une quelconque des revendications 1 à 4, **caractérisé en ce qu'**il comprend, en particulier lorsqu'au moins l'une des conditions est satisfaite, le fait de transmettre les données de mesure brutes comprimées et formatées de chaque capteur (1) concerné sur une voie radio, en particulier en fonction de la technique de transmission radio utilisée, de la puissance des moyens de communication (2) des différents capteurs (1) et/ou de leurs emplacements respectifs, soit à un module concentrateur (5) fixe qui gère et adresse un réseau local (6) d'une pluralité de capteurs (1) qui lui sont associés et pour lesquels il gère au moins les transmissions de liaison montante, soit directement à l'installation de traitement (8).

6. Procédé selon l'une quelconque des revendications 1 à 5, **caractérisé en ce qu'**il comprend le fait de transmettre pour chaque capteur (1) concerné les données de mesure brutes comprimées sur une voie radio à une unité de télérelève radio mobile (7), après réception d'une requête correspondante provenant de cette dernière ou automatiquement à intervalles réguliers.

7. Procédé selon l'une quelconque des revendications 1 à 6, **caractérisé en ce que** concernant la préparation, il comprend le fait de comprimer ou compacter les valeurs de mesure brutes stockées et les mettre dans un format adapté à la transmission radio si au moins l'une des conditions est satisfaite, de transmettre les données comprimées et formatées à un module concentrateur fixe (5) qui fait partie d'un réseau local sans fil (6), et ensuite de retransmettre les données comprimées et formatées pour une analyse centralisée, conjointement avec les données comprimées et formatées de chacun des autres capteurs (1) qui font partie du même réseau (6), par exemple par une liaison internet (10), à une installation de traitement distante (8) telle qu'un centre de calcul ou similaires.

8. Procédé selon l'une quelconque des revendications 1 à 7, **caractérisé en ce que** la compression des données de mesure brutes est effectuée sans perte, ou **en ce que** la compression des données de mesure brutes est effectuée avec un niveau de perte admissible prédéfini.

9. Procédé selon l'une quelconque des revendications 1 à 8, **caractérisé en ce qu'**il comprend le fait de transmettre avec les paquets de données (PAⱼ) des données de mesure brutes également de l'identité (I) du capteur (1) concerné et la valeur absolue ou cumulée (VA) de la grandeur physique ou physico-chimique mesurée par le capteur (1) concerné ou du paramètre physique ou physico-chimique mesuré par le capteur (1) concerné, dans lequel cette valeur (VA) est munie d'un horodatage ou est associée à l'une des unités de mesure élémentaires (PUᵢ) horodatées, par exemple à une valeur d'index d'un compteur de fluide.

10. Procédé selon l'une quelconque des revendications 1 à 9, **caractérisé en ce qu'**il comprend également le fait de relever et de transmettre conjointement avec les paquets de données (PAⱼ) la valeur d'au moins un autre paramètre d'environnement physique ou physico-chimique (PPC) de l'environnement du capteur (1) concerné ou du fluide mesuré par celui-ci à un moment donné, comme par exemple : la conductivité du fluide, la température du fluide, le pH du fluide, la pression du fluide, un paramètre qui caractérise la qualité et/ou la composition du fluide et/ou la température de l'environnement d'installation du capteur (1).

11. Système de télérelève de capteurs (1) installés dans une région géographique déterminée et d'analyse des données relevées,
dans lequel ledit système comprend d'une part des capteurs (1) qui comprennent respectivement des moyens de stockage (3) pour le stockage au moins provisoire et la préparation de valeurs de mesure brutes en vue de leur transmission, ou qui sont associés au moins sur le plan fonctionnel à de tels moyens de stockage (3), et comprend d'autre part au moins une installation de traitement distante (8) telle qu'un centre de calcul qui est adapté et destiné à interroger, stocker et analyser les données de mesure brutes des différents capteurs (1) de la région géographique (9) en question ainsi que provenant d'autres régions qui couvrent un territoire global associé à l'installation de traitement (8),
dans lequel des moyens de communication radio (2) sont associés à chaque capteur (1), qui sont intégrés dans le capteur (1) concerné ou constituent un module séparé et éloigné,
dans lequel des sources d'énergie autonomes (4) sont prévues pour les capteurs (1) et les moyens de communication radio (2),
et le système est adapté et destiné à effectuer le procédé selon l'une quelconque des revendications 1 à 10,
dans lequel les moyens de stockage (3) de chaque capteur (1) ou module concerné comprennent un microcontrôleur qui est conçu pour effectuer une compression des données de mesure brutes horodatées et pour leur préparation en un format qui est adapté pour la transmission radio selon un protocole défini afin de conditionner les données de mesure brutes comprimées en les formatant en paquets de données (PAⱼ) de taille fixe prédéterminée, de manière répétée et conditionnelle respectivement après que la taille d'un paquet de données (PAⱼ) de données de mesure brutes comprimées a été atteinte ou après qu'un intervalle de temps prédéfini a expiré et après que la taille d'un paquet de données (PAⱼ) de données de mesure brutes comprimées accumulées qui ont été collectées depuis une transmission précédente a été atteinte, et dans lequel
les unités de mesure élémentaires (PUᵢ) horodatées, fournies par l'élément de mesure du capteur (1) respectif correspondent à au moins une grandeur physique ou physico-chimique ou à au moins un paramètre physique ou physico-chimique, dans lequel
les unités de mesure élémentaires (PUᵢ) fournies par l'élément de mesure du capteur (1) respectif représentent une valeur correspondant à la résolution de l'élément de mesure respectif ou à un multiple de celle-ci, d'une grandeur physique ou physico-chimique ou d'un paramètre physique ou physico-chimique, ou représentent une variation correspondant à la résolution de l'élément de mesure respectif ou à un multiple de celle-ci d'une grandeur physique ou physico-chimique ou d'un paramètre physique ou physico-chimique,
conformément à la résolution du capteur (1) en question,
dans lequel chaque unité de mesure élémentaire (PUᵢ) horodatée est composée d'une impulsion horodatée de sorte que les unités de mesure élémentaires (PUᵢ) représentent des datations précises de données de mesure brutes, dans lequel
la transmission de données est effectuée de manière redondante, dans lequel il est prévu que la redondance de la transmission soit atteinte par un envoi répété du même paquet de données (PAⱼ) dans plusieurs opérations de transmission consécutives,
et en ce que ladite au moins une installation de traitement (8) comprend des moyens matériels et logiciels et est conçue d'une part pour effectuer après la décompression une analyse des données de mesure brutes reçues pour la reconstruction de chronogrammes des unités de mesure (PUᵢ) associées à chacun des capteurs (1) et pour l'exécution de fonctions de gestion, et d'autre part pour effectuer pendant une période de temps déterminée un stockage cumulatif des données de mesure brutes et le cas échéant des données qui résultent de leur traitement qui proviennent de tous les capteurs (1) de réseaux connectés (6), et le cas échéant de profils correspondants.

12. Système selon la revendication 11, **caractérisé en ce qu'**il comprend pour la ou chaque région géographique (9) dans laquelle des capteurs (1) concernés sont installés un module concentrateur (5) fixe qui constitue avec les capteurs (1) de la région (9) qui lui est attribuée un réseau local sans fil (6) dans lequel il est le maître et les capteurs (1) sont les esclaves, dans lequel le module concentrateur (5) fixe est en outre relié, par exemple par une liaison internet (10), à ladite au moins une installation de traitement (8) distante.

13. Système selon la revendication 11 ou 12, **caractérisé en ce qu'**il comprend aussi au moins une unité de télérelève radio (7) temporairement stationnaire, qui est montée ou installée par exemple dans un véhicule automobile, dans ou sur un bâtiment ou sur un terrain, et qui est adaptée et destinée à collecter soit après l'envoi précédent d'une requête correspondante de l'unité de télérelève radio (7) à un capteur (1) en question, soit automatiquement à intervalles réguliers, les données de mesure brutes pendant le passage à proximité du capteur (1) en question « à la volée », à un moment donné ou pendant une période de temps déterminée.

14. Système selon l'une quelconque des revendications 11 à 13, **caractérisé en ce que** les moyens de stockage (3) de chaque capteur (1) constituent un stockage tampon et sont adaptés et conçus pour stocker le contenu de plusieurs paquets (PAⱼ) de données de mesure brutes à l'état comprimé, dans lequel le contenu ou une partie du contenu de ce stockage tampon est transmis(e) à chaque transmission de liaison montante par le capteur (1) concerné.
